Europäisches Patentamt

European Patent Office

Office européen des brevets

(19)

(11) **EP 1 050 744 B1**

(12) **EUROPÄISCHE PATENTSCHRIFT**

(45) Veröffentlichungstag und Bekanntmachung des Hinweises auf die Patenterteilung:
**23.07.2003 Patentblatt 2003/30**

(51) Int Cl.⁷: **G01D 5/20**

(21) Anmeldenummer: **00109332.7**

(22) Anmeldetag: **02.05.2000**

(54) **Induktiver Linearsensor und induktiver Winkelsensor**

Linear inductive sensor and inductive angle sensor

Capteur inductif de position linéaire et capteur inductif de rotation

(84) Benannte Vertragsstaaten:
**DE ES FR GB IT**

(30) Priorität: **03.05.1999 DE 19920190**

(43) Veröffentlichungstag der Anmeldung:
**08.11.2000 Patentblatt 2000/45**

(73) Patentinhaber: **Hella KG Hueck & Co.**
**59552 Lippstadt (DE)**

(72) Erfinder:
• **Henning, Irle**
**59557 Lippstadt (DE)**
• **Kost, Norbert**
**59590 Geseke (DE)**
• **Schmidt, Franz-Josef**
**33154 Salzkotten (DE)**

(56) Entgegenhaltungen:
**DE-A- 19 738 836** **US-A- 4 638 250**

**Beschreibung**

Die Erfindung betrifft einen induktiven Linearsensor nach dem Oberbegriff des Anspruches 1 und einen induktiven Winkelsensor nach dem Oberbegriff des Anspruches 3.

Das der Erfindung zugrundeliegende Problem und dessen erfindungsgemäßen Lösung werden im folgenden am Beispiel eines Linearsensors mit einem rechteckförmigen induktiven Koppelelement erläutert. Die Problemstellung und die Lösung sind für den induktiven Winkelsensor jedoch vollständig analog.

Das anhand eines Winkelsensors dargestellte Meßprinzip ist aus der DE 197 38 836 A1 bekannt. Diese Schrift zeigt zudem in der Figur 6 induktive Koppelelemente mit einer mäanderförmigen Struktur.

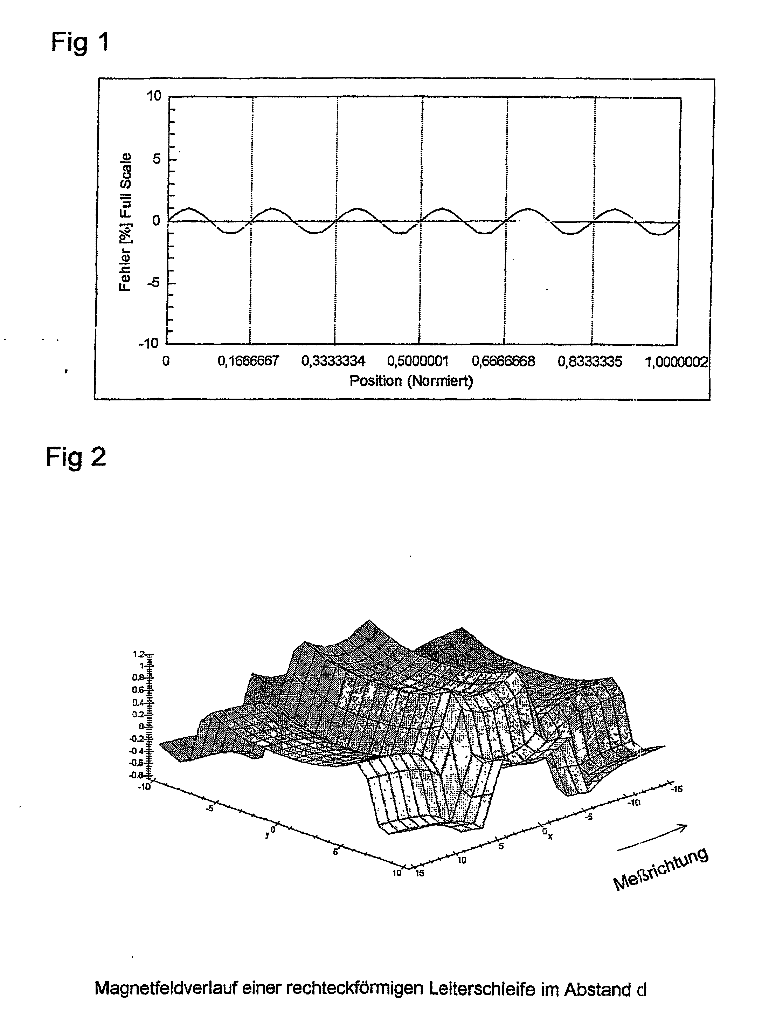

Die Ausgangssignale solcher Linear- und Winkelsensoren zeigen einen gewissen Restfehler über die Position des Sensors. Dieser ist für einen Linearsensor beispielhaft in der Figur 1 dargestellt. Aufgetragen ist hier der prozentuale Fehler des Sensors gegen die normierte Positon des induktiven Koppelelementes.

Eine Analyse zeigt, daß dieser Fehler von dem nichtlinearen Verlauf des Magnetfelds des induktiven Koppelelements verursacht wird. Der Magnetfeldverlauf einer rechteckförmigen Leiterschleife in einem definierten Abstand d ist in der Figur 2 dargestellt.

Der größte Teil des Fehlers wird dabei von der Einsenkung des Plateaus in Meßrichtung verursacht. Die sechsfache Wiederholung des Fehlers über den Meßweg rührt daher, daß der gesamte Weg von der Signalverarbeitung bei einem Sensor mit drei Empfangsspulen in 6 Teilbereiche eingeteilt wird. Das Meßprinzip eines Sensors mit mehreren Empfangsspulen ist in der DE 197 38 839 A1 beschrieben.

Die Größe dieses Fehler stellt die wesentliche Begrenzung für die durch einen gattungsgemäßen Sensor erzielbare Genauigkeit dar.

Es ist somit die Aufgabe der Erfindung einen induktiven Sensor zu schaffen, bei dem der Fehler, der durch die Inhomogenität des vom induktiven Koppelelements erzeugten Magnetfelds entsteht, deutlich verringert ist.

Diese Aufgabe wird erfindungsgemäß durch die kennzeichnenden Merkmale der Ansprüche 1 und 3 gelöst.

Ausgehend von einer einfachen Geometrie des beweglichen induktiven Koppelelelments mit einer Rechteckleiterschleife bei einem Linearsensor, was bei einem Winkelsensor einer geschlossenen Mäanderstruktur entspricht, und einer gegebenen Geometrie der Empfangsleiterschleifen wird die Geometrie des beweglichen induktiven Koppelelements gezielt abgewandelt, um das gewünschte Ergebnis zu erzielen.

Durch diese Anpassung der Geometrie des induktiven Koppelelements wird der Fehler minimiert, so daß insgesamt ein Sensor mit einer höheren Genauigkeit realisiert werden kann.

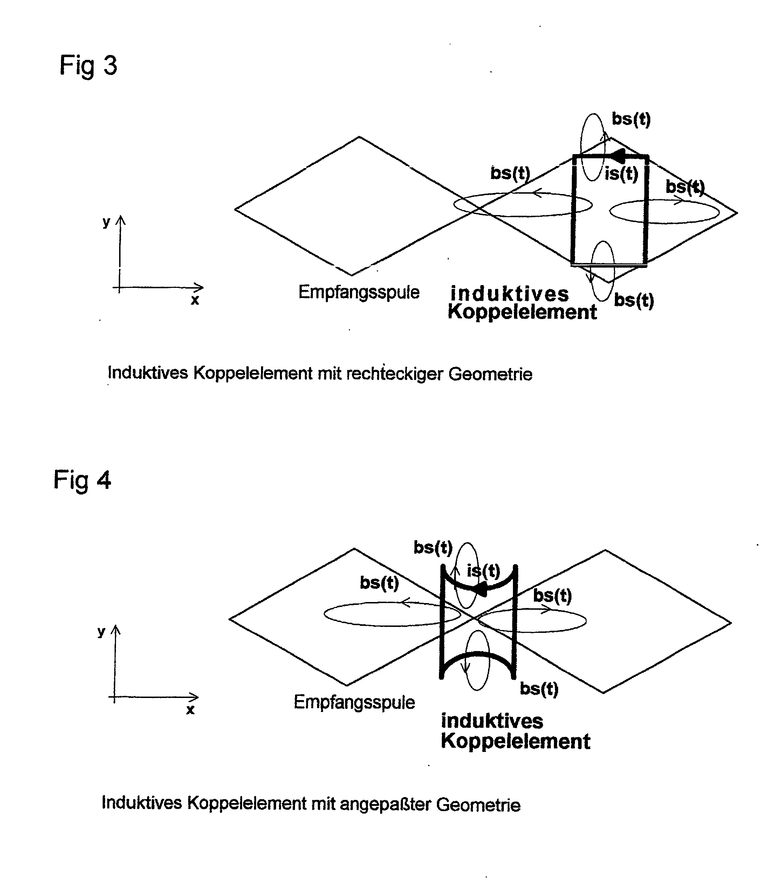

Die der Erfindung zugrundeliegende Überlegungen erläutern die Figuren 3 und 4:

Die Figur 3 zeigt in schematischer Vereinfachung einen induktiven Linearsensor, und zwar einen Ausschnitt einer Empfangsspule, sowie einem beweglichen induktiven Koppelelement mit rechteckiger Geometrie. Aus Gründen der Übersichtlichkeit wurde auf die Darstellung weiterer Einzelheiten verzichtet. So ist insbesondere die Sendespule nicht eingezeichnet, die man sich diese um die dargestellte Anordnung herumgeführt vorstellen kann.

Die von dem beweglichen induktiven Koppelelement in einer Empfangsspule induzierte Spannung ergibt sich als zeitliche Ableitung des magnetischen Flusses $U_i = -\frac{d\Phi}{dt}$. Der magnetische Fluß ergibt sich bei einem gegebenen Magnetfeldverlauf in der Empfangsleiterschleifen-Ebene, d.h. bei gegebener Geometrie des beweglichen Koppelelements sowie konstantem Abstand und konstanter y-Position zwischen beweglichem induktiven Koppelelement und Stator, $b_s(t,x,x0,y)$ zu $\Phi_{(t)} = \int_A b_s(t, x - x_0, y)dA$, wobei A die Fläche der Empfangsspule und $x_0$ die Position des beweglichen induktiven Koppelelements zu den Empfangsspulen in Meßrichtung ist. Das gewünschte Verhalten ist ein linearer Zusammenhang zwischen $U_i$ und $x_0$: $U_i = k \cdot x_0$. *Dies kann aber auch so ausgedrückt werden, daß die* Ableitung von $U_i$ nach $x_0$ eine Konstante sein muß $\frac{U_i}{dx_0}$ = *const*. Da bei der Auswertung des Signals eine zeitliche Mittelung vorgenommen wird, ist die Zeitabhängigkeit des Signals bei dieser Betrachtung unwichtig, so daß für das gewünschte Verhalten direkt gefordert werden:

$$\frac{d\Phi}{dx_0} = const.$$

Wird von einer beliebigen Geometrie des beweglichen induktiven Koppelelements ausgegangen, so ergibt die Berechnung $\frac{d}{dx_0}\int b_s(t,x-x_0,y)dA$ in der dargestellten Anordnung mit einem rechteckförmigen induktiven Koppelelement keinen konstanten Wert.

Erfindungsgemäß wird nun die Geometrie des beweglichen induktiven Koppelelements derart variiert, daß diese Forderung zumindest näherungsweise erfüllt wird. Allerdings kann die hierzu erforderliche Ausgestaltung des induktiven Koppelelements mathematisch nicht oder nur mit einem erheblichen Aufwand bestimmt werden, da diese empfindlich von der genauen Gestaltung der Sende-, Empfangsspulen abhängt, welche eine relativ komplexe Struktur aufweisen können. Vorteilhaft ist es daher, die Formgebung des induktiven Koppelelementes auf empirischem Wege zu bestimmen, indem man ausgehend von einem rechteckförmigen Koppelelement bei einem Linearsensor bzw. einem mäanderförmigen Koppelelement bei einem Winkelsensor, die Formgebung derart variiert, daß das Fehlersignal geringer, und im Idealfall minimal wird.

Hierbei hat es sich beim Linearsensor bewährt, daß wenigstens eine der Begrenzungslinien des (ursprünglich rechteckförmigen) induktiven Koppelelementes kreisbogenförmig gewölbt auszubilden. Beim Winkelsensor kann eine Minimierung des Fehlersignals dadurch erzielt werden, daß die kreisbogenförmigen Abschnitte zumindest teilweise von der Kreisbogenform abweichen und/oder die (ursprünglich) radialen Abschnitte zumindest teilweise von der radialen Richtung abweichend ausgebildet sind. Die genaue Ausbildung des induktiven Koppelelementes hängt dabei immer von der gesamten sonstigen Geometrie des Sensors ab und muß für jeden Einzelfall bestimmt werden.

## Patentansprüche

1. Induktiver Linearsensor für ein Kraftfahrzeug mit einer Oszillatorschaltung, die ein periodisches Wechselspannungssignal erzeugt und in eine Erregerspule einkoppelt, mit mehreren Empfangsspulen und einer Auswerteschaltung zur Auswertung der in den Empfangsspulen induzierten Signale und einem beweglichen induktiven Koppelelement, welches die Stärke der induktiven Kopplung zwischen Erregerspule und den Empfangsspulen beeinflußt, **dadurch gekennzeichnet, daß**
   ausgehend von einem induktiven Koppelelement in Form einer rechteckig begrenzten beweglichen Leiterschleife, die Formgebung wenigstens einer der Begrenzungslinien des Koppelelements von der geometrischen Form einer Geraden abweichend ausgebildet ist.

2. Induktiver Sensor nach Anspruch 1, **dadurch gekennzeichnet, daß** wenigstens eine Begrenzungslinie kreisbogenförmig gewölbt ist.

3. Induktiver Winkelsensor für ein Kraftfahrzeug mit einer Oszillatorschaltung, die ein periodisches Wechselspannungssignal erzeugt und in eine Erregerspule einkoppelt, mit mehreren Empfangsspulen und einer Auswerteschaltung zur Auswertung der in den Empfangsspulen induzierten Signale und einem beweglichen induktiven Koppelelement, welches die Stärke der induktiven Kopplung zwischen Erregerspule und den Empfangsspulen beeinflußt, und dessen geometrischer Formgebung einem kreisbogenförmig angeordneten, geschlossenen Mäander entspricht,
   **dadurch gekennzeichnet, daß**
   ausgehend von einem Koppelelement mit in Form einer mäanderförmig begrenzten beweglichen Leiterschleife, deren Mäanderstruktur aus gegeneinander versetzt angeordneten Kreisbogenabschnitten und radialen Verbindungslinien zwischen den Kreisbogenabschnitten besteht, die Richtung wenigstens einer Verbindungslinie von der Radialrichtung abweicht.

4. Induktiver Sensor nach Anspruch 3, **dadurch gekennzeichnet, daß** die normalerweise Kreisbogenabschnitte ausbildenden Begrenzungslinien der Mäanderstruktur von der idealen Kreisbogenform abweichen.

## Claims

1. Inductive linear sensor for a motor vehicle, having an oscillator circuit that generates a periodic alternating voltage signal and injects into an operating coil, having a plurality of receiving coils and an evaluation circuit for evaluating the signals induced in the receiving coils, and having a moving inductive coupler that influences the strength of the inductive coupling between the operating coil and the receiving coils, **characterised in that** starting from an inductive coupler in the form of a rectangularly demarcated moving conductor loop, the shaping of at least one of the coupler's demarcation lines is configured so as to deviate from the straight line geometric form.

2. Inductive sensor according to claim 1, **characterised in that** at least one demarcation line is curved like an arc of a circle.

3. Inductive sensor for a motor vehicle, having an oscillator circuit that generates a periodic alternating voltage signal and injects into an operating coil, having a plurality of receiving coils and an evaluation circuit for evaluating the signals induced in the receiving coils, and having a moving inductive coupler that influences the strength of the inductive coupling between the operating coil and the receiving coils, and the geometric shaping of which corresponds to a closed, arc-of-circle serpentine, **characterised in that** starting from a coupler in the form of a moving conductor loop demarcated in a serpentine-like manner, the serpentine structure of which comprises mutually offset arc-of-circle sections and radial connecting lines between the arc-of-circle sections, the direction of at least one connecting line deviates from the radial direction.

4. Inductive sensor according to claim 3, **characterised in that** the demarcation lines of the serpentine structure which normally form arc-of-circle sections deviate from the ideal arc-of-circle form.

## Revendications

1. Capteur linéaire inductif pour un véhicule automobile comportant un circuit oscillant, qui produit un signal de tension alternative périodique et l'injecte dans une bobine d'excitation, comportant plusieurs bobines de réception et un circuit d'évaluation servant à évaluer les signaux induits dans les bobines de réception, et un élément de couplage inductif mobile, qui influe sur l'intensité du couplage inductif entre la bobine d'excitation et les bobines de réception,

**caractérisé en ce que**

la configuration d'au moins l'une des lignes limites de l'élément de couplage est formé, d'une manière qui diffère de la forme géométrique d'une droite, à partir d'un élément inductif se présentant sous la forme d'une boucle conductrice mobile ayant un contour rectangulaire.

**2.** Capteur inductif selon la revendication 1, **caractérisé en ce qu'**au moins une ligne limite est cintrée en forme d'arc de cercle.

**3.** Capteur angulaire inductif pour un véhicule automobile comportant un circuit oscillant, qui produit un signal de tension alternative périodique et l'injecte dans une bobine d'excitation, comportant plusieurs bobines de réception et un circuit d'évaluation servant à évaluer les signaux induits dans les bobines de réception, et un élément de couplage inductif mobile, qui influe sur l'intensité du couplage inductif entre la bobine d'excitation et les bobines de réception, et dont la configuration géométrique correspond à une forme sinueuse formée disposée en arc de cercle,

**caractérisé en ce que**

à partir d'un élément de couplage possédant une boucle conductrice mobile limitée avec une forme sinueuse, et dont la structure sinueuse est constituée par des sections en arc de cercle qui sont décalées les unes par rapport aux autres et des lignes radiales de jonction entre les sections en arc de cercle, la direction d'au moins une ligne de jonction diffère de la direction radiale.

**4.** Capteur inductif selon la revendication 3, **caractérisé en ce que** les lignes limites de la structure sinueuse, qui forment normalement des sections en arc de cercle, diffèrent de la forme en arc de cercle idéale.

# Fig 1

# Fig 2

Magnetfeldverlauf einer rechteckförmigen Leiterschleife im Abstand d

**Fig 3**

Induktives Koppelelement mit rechteckiger Geometrie

**Fig 4**

Induktives Koppelelement mit angepaßter Geometrie